# EUROPEAN PATENT SPECIFICATION

(11) **EP 2 977 736 B1**
(45) Date of publication and mention of the grant of the patent: **10.07.2019**
(21) Application number: 13878740.3
(22) Date of filing: 11.12.2013
(51) Int. Cl.: G01L 3/10, B62D 5/04, B62D 6/10, G01L 5/22

(54) **TORQUE DETECTION DEVICE, ELECTRIC POWER STEERING DEVICE, AND VEHICLE**
DREHMOMENTDETEKTOR UND ELEKTRISCHE SERVOLENKVORRICHTUNG SOWIE FAHRZEUG
DISPOSITIF DE DÉTECTION DE COUPLE, DISPOSITIF DE DIRECTION ASSISTÉE ÉLECTRIQUE ET VÉHICULE

(30) Priority: 19.03.2013 JP 2013056812
(43) Date of publication of application: 27.01.2016
(73) Proprietor: NSK Ltd., Tokyo 141-8560 (JP)
(72) Inventor: KAWAI, Yasuhiro, Fujisawa-shi Kanagawa 251-8501 (JP); SUGITA, Sumio, Fujisawa-shi Kanagawa 251-8501 (JP); HATANAKA, Kazuyuki, Fujisawa-shi Kanagawa 251-8501 (JP); KUWAHARA, Masaki, Fujisawa-shi Kanagawa 251-8501 (JP)
(74) Representative: Klingseisen, Franz
(86) International application number: PCT/JP2013/007302
(87) International publication number: WO 2014/147687

(56) References cited:
- WO-A1-2004/018987
- WO-A1-2008/053594
- JP-A- H 113 745
- JP-A- H06 241 340
- JP-A- 2003 161 332
- JP-A- 2006 343 347
- JP-A- 2008 111 804
- JP-U- H0 678 833
- US-A- 5 526 704
- US-A1- 2006 191 356
- US-B1- 6 301 975

## Description

### Technical Field

The present invention relates to a torque detection apparatus configured to detect torque generated at a rotation shaft, an electric power steering apparatus, and a vehicle, each including the torque detection apparatus.

### Background Art

As an electric power steering apparatus, in one technology, for example, there is a technology disclosed in Patent Literature 1. In such a technology, a torque sensor, in which two coil units respectively including coil bobbins around which coils are wound are opposed to each other, is arranged at the inside of a holder formed of an electromagnetic yoke and a yoke cover.

### Citation List

### Patent Literature

PLT 1: WO 2004/018987

### Summary

### Technical Problem

In the technology as disclosed in PLT 1, however, each coil unit includes a single coil bobbin and a single electromagnetic yoke and a single yoke cover, respectively. After the coil bobbin is fit at the inside of the electromagnetic yoke, the process of press-fitting the yoke cover into the inner diameter of the electromagnetic yoke has to be conducted for each coil unit.

In a further prior art according to WO 2008/053594 A1, a power steering device with a torque detection means is disclosed, in which a coil assembly and a sensor circuit board with a torsion bar are provided. The sensor circuit board is assembled to a base plate to form a sensor assembly, which enables an easy mounting and assembling of the sensor components at a time.

Therefore, it is an object of the present invention to provide a torque detection apparatus capable of achieving a reduction in the number of component members and an improvement in the assembling performance, an electric power steering apparatus, and a vehicle, each including the torque detection apparatus.

### Solution to Problem

A further problem of the invention of the present application is to provide a torque detection apparatus with a simple configuration, which enables an improved positioning and adjustment of the terminals of the sensor components. This problem is solved by means of a torque detection apparatus according to claim 1. Preferred forms of realization are defined in the dependent claims.

In order to address the above drawbacks, in one embodiment of the present invention, there is provided a torque detection apparatus, including: a pair of detection coils configured to change impedances in opposite directions to each other depending on torque generated at a rotation shaft; two coil bobbins having reel shapes around which the pair of detection coils are wound, respectively; two electromagnetic yokes having cylindrical portions in which the two coil bobbins are fit and held, respectively; and a yoke cover configured to be press-fit into inner diameters of the cylindrical portions of the two electromagnetic yokes at a position interposed by the two electromagnetic yokes facing each other in an axial direction, wherein the torque is detected based on output voltages of the pair of detection coils.

As described above, two coil bobbins around which the detection coils are wounded, respectively, are positioned to face each other. The yoke cover is interposed between them. The yokes are press-fit with the two coil bobbins from both sides in the axial direction to integrate the detection coils corresponding to two parts. In other words, only one yoke cover is provided for two yokes, and the number of times of press-fitting the yoke cover is once. Accordingly, as compared to a case where one coil bobbin, one yoke, and one yoke cover are provided, one yoke cover is press-fit into one yoke, and then two yokes into which two yoke covers are respectively press-fit are integrated together, the number of parts corresponding to one yoke cover can be reduced, and the number of times of press-fitting the yoke cover into the yoke can be reduced, too.

In addition, the above-described torque detection apparatus may further include a press-fit regulation portion configured to regulate a press-fit depth of the yoke cover with respect to the two electromagnetic yokes. Accordingly, it is possible to prevent one yoke cover from being press-fit into one of the yokes completely, and it is possible to press-fit one yoke cover into two yokes.

Further, in the above-described torque detection apparatus, the press-fit regulation portion may be formed at an end portion in the axial direction of each of the cylindrical portions of the two electromagnetic yokes, and is configured with a depression portion being depressed in the axial direction and a projection portion being formed at the yoke cover to project outwardly in a radial direction with respect to an inner diameter of each of the two electromagnetic yokes, and the press-fit depth of the yoke cover with respect to each of the two electromagnetic yokes may be regulated by abutting an end face on an outer side in the axial direction of the projection portion against a bottom portion of the depression portion. Accordingly, it is possible to regulate the press-fit depth of the yoke cover into the yokes, with a relatively simple configuration.

In addition, in the above-described torque detection apparatus, the yoke cover may include an R portion at an end portion in the axial direction on an outer circumferential face. Thus, it is possible to improve the press-fit performance of the yoke cover into the yokes.

Further, the above-described torque detection apparatus may further include a regulation portion configured to regulate a phase difference in a circumferential direction between the two coil bobbins, on a mating face side of each of the two coil bobbins.

Thus, it is possible to prevent the coil bobbins making a pair from rotating in the circumferential direction, and to regulate a phase displacement. Therefore, when the coil bobbin is provided with a coil side terminal for connection with the sensor circuit board, it is possible to maintain the position of the coil side terminal always at a given position. Accordingly, it is possible to connect the coil with the circuit board appropriately.

In addition, in the above-described torque detection apparatus, the regulation portion may be a step portion in which a depression and a protrusion are arranged in parallel to each other in the circumferential direction on the mating face side of each of the two coil bobbins. In this manner, it is possible to regulate a phase difference in the circumferential direction of both of the coil bobbins with a relatively simple configuration.

The above-described torque detection apparatus further includes: a terminal attachment portion formed at an end portion of a side face of each of the two coil bobbins and having terminals to which a tip portion and a termination portion of one of the pair of detection coils are attached, respectively; and a movement regulation portion configured to regulate a movement in the axial direction of the terminal attachment portion with respect to the two coil bobbins facing each other.

As described above, the position accuracy of the coil side terminal can be ensured by regulating the movement in the axial direction of the terminal attachment portion. Thus, even when the coil side terminal is inserted and soldered into the through hole of the printed board, it is possible to insert the coil side terminal into the through hole with ease and improve the assembling performance.

Further, in the above-described torque detection apparatus, the movement regulation portion may be configured with a first projection portion formed by a part of a flange portion of a first one of the two coil bobbins projecting outwardly in the radial direction, and a movement of the terminal attachment portion formed at a second one of the two coil bobbins in the axial direction and toward the first one side of the two coil bobbins may be regulated by abutting the first projection portion formed at the first one of the two coil bobbins against at least a part of the movement regulation portion formed at the second one of the two coil bobbins from mating face sides of the two coil bobbins.

As described above, as the movement regulation portion is formed by a part of the flange portion of the coil bobbin, it is possible to regulate the movement in the axial direction of the terminal attachment portion with a relatively simple configuration.

Further, in the above-described torque detection apparatus, the movement regulation portion may be configured with a second projection portion formed by a part of the terminal attachment portion projecting outwardly in the circumferential direction, and a movement of the terminal attachment portion formed at the second one of the two coil bobbins in the axial direction and toward an opposite side to the first one of the two coil bobbins may be regulated by abutting the second projection portion formed at the terminal attachment portion formed at the first one of the two coil bobbins against at least a part of the terminal attachment portion formed at the second one of the two coil bobbins from an opposite side to the mating faces of the two coil bobbins.

As described above, as the movement regulation portion is formed by a part of the terminal attachment portion, it is possible to regulate the movement in the axial direction of the terminal attachment portion with a relatively simple configuration.

In addition, the above-described torque detection apparatus includes: a circuit board having a torque detection function configured to detect the output voltages of the pair of detection coils and to detect the torque based on the output voltages; a board side connector mounted on the circuit board; and a coil side connector formed at each of the two coil bobbins, having the terminal attachment portion and the terminals, and being electrically connectable to the board side connector.

As described above, the coil side connector and the board side connector are connected, and then the detection coil and the circuit board are electrically connected. In addition, the use of connector connection eliminates the necessity of soldering to connect the detection coil and the circuit board, unlike the prior art technology. For this reason, the assembling process can be simplified and the quality can be improved, too.

Further, in the above-described torque detection apparatus, the board side connector may be a connector having a same number of movable pieces to a number of the detection coils. As described above, since the board side connector is configured with a movable connector, even if the relative positional displacement caused by an assembling error occurs at the coil side terminal, the coil side terminal can be connected to the board side connector with certainty.

In addition, in the above-described torque detection apparatus, the board side connector may have two movable pieces corresponding to the pair of detection coils. In this manner, since a pair of detection coils (i.e., two detection coils) are provided, assembling is made easy and the configuration of the board side connector is simplified.

Furthermore, in the above-described torque detection apparatus, the coil side connector may include: the terminals configured to stand up at the terminal attachment portion, in an insertion direction of the coil side connector into the board side connector; and a plate-shaped guide portion formed at at least one side face of the terminal attachment portion and protruding in the insertion direction.

Accordingly, the insertion performance at the time of inserting the coil side connector into the board side connector can be improved. In addition, since the guide portion can be arranged at a position surrounding the coil side terminal, the coil side terminal can be protected.

In addition, in another embodiment of the present invention, there is provided an electric power steering apparatus, including: an electric motor configured to apply to a steering system a steering assist force to reduce a steering burden of a driver; the torque detection apparatus according to any one of claim 1 to claim 13 configured to detect steering torque input into a steering mechanism; and a motor controller configured to drive and control the electric motor to apply the steering assist force based on at least the steering torque detected by the torque detection apparatus.

As described above, it is possible for the torque detection apparatus with high assembling performance to detect the steering torque appropriately. Therefore, the electric power steering apparatus with high reliability can be achieved.

In addition, in yet another embodiment of the present invention, there is provided a vehicle including the above-described electric power steering apparatus. Thus, it is possible to conduct the steering assist control with high reliability.

### Advantageous Effects

According to the torque detection apparatus in one embodiment of the present invention, as the yoke cover to be press-fit into two yokes holding a pair of coil bobbins, respectively, is used as a common member, the number of parts can be reduced. In addition, as the number of times of press-fitting the yoke cover can be reduced, the assembling performance can be improved.

Then, in an electric power steering apparatus, and a vehicle, each including the above torque detection apparatus, the steering assist control with high reliability can be achieved.

### Brief Description of Drawings

FIG. 1 is a cross-sectional view illustrative of substantial parts of an electric power steering apparatus including a toque detection apparatus in one embodiment of the present invention;
FIG. 2 is a view illustrative of a configuration of a torque detector;
FIG. 3 is a perspective view illustrative of component members of the torque detector;
FIG. 4 is a view illustrative of a connection method of the torque detector and a circuit board;
FIG. 5 is a view illustrative of a board side connector;
FIG. 6 is a side view illustrative of component members of the torque detector;
FIG. 7 is a view illustrative of a state where the torque detector is assembled;
FIG. 8 is a view illustrative of a connection state of the torque detector and the circuit board;
FIG. 9 is a view illustrative of a coil bobbin in a second embodiment;
FIG. 10 is a view illustrative of a state where the coil bobbin in the second embodiment is assembled;
FIG. 11 is a view illustrative of a coil bobbin in a third embodiment;
FIG. 12 is a view illustrative of a state where the coil bobbin in the third embodiment is assembled; and
FIG. 13 is a view illustrative of another example of the connection state of the torque detector and the circuit board.

### Description of Embodiments

Hereinafter, embodiments of the present invention will be described with reference to the attached drawings.

In one embodiment of the present invention, a torque detection apparatus is applied to an electric power steering apparatus of a vehicle.

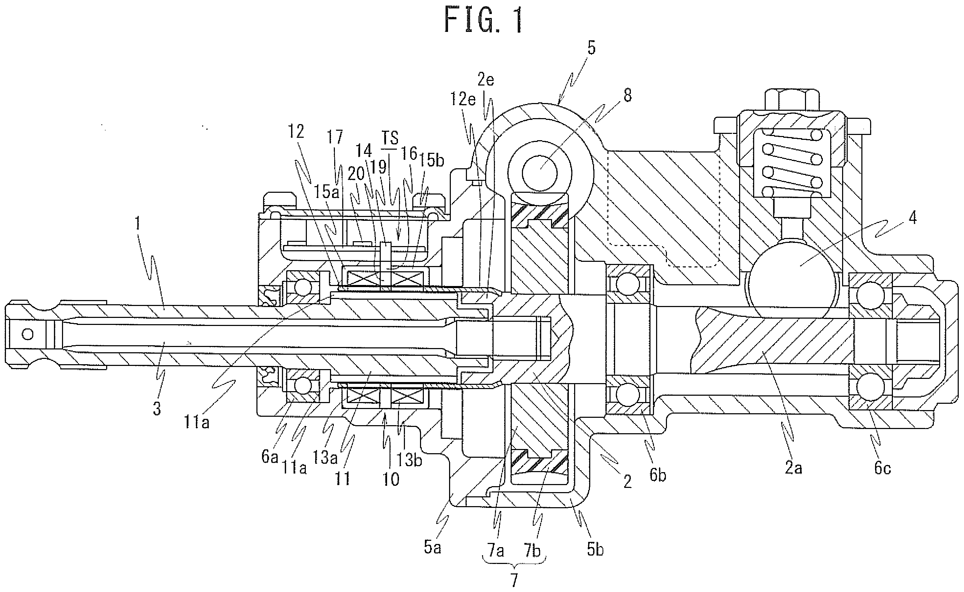

FIG. 1 is a cross-sectional view illustrative of substantial parts of the electric power steering apparatus in one embodiment of the present invention.

In FIG. 1, reference numeral 5 is a housing, and the housing 5 has a structure of being divided into two regions, which are an input shaft side housing portion 5a and an output shaft side housing portion 5b. In the inside of the input shaft side housing portion 5a, an input shaft 1 is rotatably supported by a bearing 6a. In addition, in the inside of the output shaft side housing portion 5b, an output shaft 2 is rotatably supported by bearings 6b and 6c.

Then, the input shaft 1 and the output shaft 2 are coupled through a torsion bar 3 arranged at the inside of the input shaft 1.

The input shaft 1, the torsion bar 3, and the output shaft 2 are coaxially arranged, the input shaft 1 and the torsion bar 3 are pin-connected, and the torsion bar 3 and the output shaft 2 are spline-coupled. In FIG. 1, the steering wheel, not illustrated, is integrally attached at a projection end of the input shaft 1. In addition, a pinion shaft 2a is integrally formed at the output shaft 2 on the opposite side of the input shaft 1, and the pinion shaft 2a meshes with a rack 4 to have a configuration of a rack and pinion type steering mechanism.

Further, a worm wheel 7 is firmly secured at the output shaft 2 to be coaxial and integrally rotate with the output shaft 2, and meshes with a worm 8 to be driven by an electric motor, not illustrated, at the inside of the output shaft side housing portion 5b. In the worm wheel 7, a teeth portion 7b made of a synthetic resin is integrally secured to a metal hub 7a. The rotation force of the electric motor is transmitted to the output shaft 2 through the worm 8 and the worm wheel 7, and applies steering assist torque to the output shaft 2 in an arbitrary direction by appropriately changing the rotation direction of the electric motor.

Next, a description will be given of a torque detector 10 configuring a torque sensor (torque detection apparatus) TS configured to detect the torque between the input shaft 1 and the output shaft 2.

The torque detector 10 includes a sensor shaft portion 11 formed at the input shaft 1, a pair of detection coils 13a and 13b arranged at the inside of the input shaft side housing portion 5a, and a cylindrical member 12 arranged between the sensor shaft portion 11 and the pair of detection coils 13a and 13b.

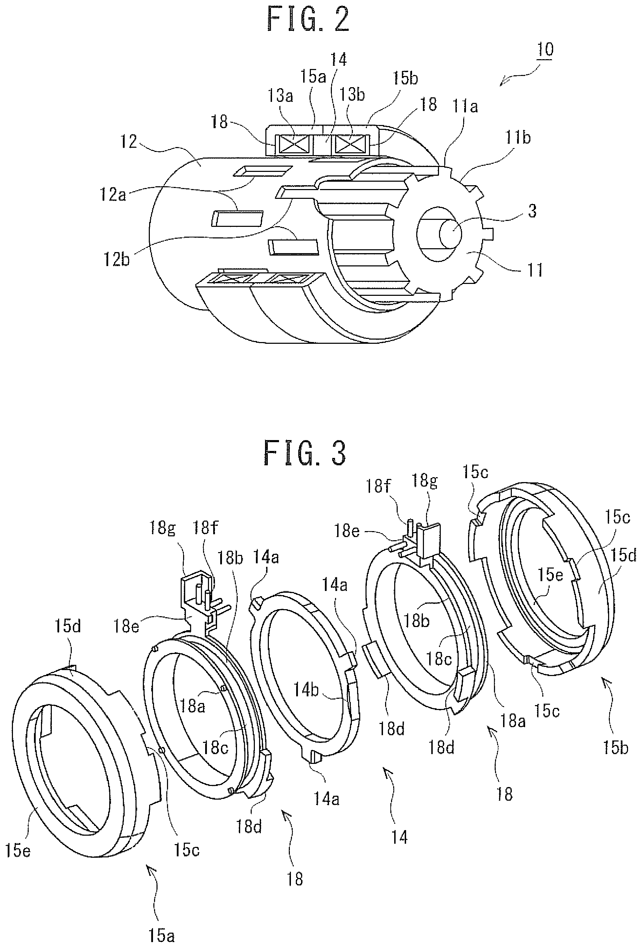

The sensor shaft portion 11 is configured with a magnetic material, and as illustrated in FIG. 2, plural (nine, in an example of FIG. 2) projection lines 11a extending in an axial direction are formed in a circumferential direction at regular intervals on a surface of the sensor shaft portions 11. In addition, groove portions 11b are formed between the projection lines 11a, respectively.

On the outside of sensor shaft portions 11, the cylindrical member 12 configured with a conductive and non-magnetic material, for example, aluminum to be close to the sensor shaft portion 11 is arranged coaxially with the sensor shaft portion 11. As illustrated in FIG. 1, an extension portion 12e of the cylindrical member 12 is secured to the outside of an end portion 2e of the output shaft 2.

The cylindrical member 12 is provided with a first window sequence configured with plural (nine, in an example of FIG. 2) rectangular windows 12a arranged at regular intervals in the circumferential direction at positions facing the projection lines 11a on the surface of sensor shaft portions 11, and a second window sequence configured with plural (nine, in an example of FIG. 2) rectangular windows 12b having an identical shape to the rectangular windows 12a and having different phases in the circumferential direction at positions deviated from the first window sequence in the axial direction, respectively.

The outer circumference of the cylindrical member 12 is surrounded by yokes 15a and 15b configured to hold coil bobbins 18 around which detection coils 13a an 13b having identical specifications are wound, respectively. The detection coils 13a and 13b are arranged coaxially with the cylindrical member 12, such that the detection coil 13a surrounds the first window sequence configured with the windows 12a, and the detection coil 13b surrounds the second window sequence configured with the windows 12b.

The yokes 15a and 15b are secured at the inside of the input shaft side housing portion 5a, as illustrated in FIG. 1, and output lines of the detection coils 13a and 13b are connected through a connector (coil side connector) 16 to a connector (board side connector) 19 of a circuit board 17 arranged at the inside of the input shaft side housing portion 5a. In addition, as another method, although not illustrated, a coil tip portion may be bound to a coil side terminal that is press-fit into the coil bobbin 18 and secured by soldering, and then may be inserted into a board through hole and connected by soldering. Here, including the board side connector 19, electronic parts that operate as an electric circuit of the circuit board 17 are mounted on the circuit board by surface mounting with reflow soldering or lead soldering.

FIG. 3 is a perspective view illustrative of component members of the torque detector 10.

The coil bobbin 18 is a reel-shaped member made of a non-conductor such as plastic, and is secured to the input shaft side housing portion 5a to be coaxial with the input shaft 1 and the output shaft 2. The coil bobbin 18 includes a pair of flange portions 18a and 18b, and the coil 13a or the coil 13b is wound around a groove portion 18c between the flange portions 18a and 18b.

In the torque detector 10 in one embodiment the present invention, the two coil bobbins 18, around which the coils 13a and 13b are respectively wound and which have an identical shape, are used to be opposed to each other.

At a side face end portion of the flange portion 18b, a terminal attachment portion 18e, to be described later, configuring the coil side connector 16 to be connectable to the board side connector 19 is formed, and a regulation portion 18d is formed at a position of line symmetry, with a symmetry axis being set as a perpendicular line which virtually goes through the center of the coil bobbin 18 in the state where the terminal attachment portion 18e is located at an upper end portion of the coil bobbin 18.

The regulation portion 18d includes a base portion that is a part of the flange portion 18b protruding outwardly in the radial direction, and a projection portion formed to protrude outwardly in the axial direction of the coil bobbin 18 at one of the regions of the base portion formed by equally dividing the base portion in the circumferential direction. In other words, in a state where the two coil bobbins 18 are coaxially arranged with the flange portions 18b facing each other, the regulation portions 18d of both of the coil bobbins 18 abut each other in the circumferential direction, so that relative positions in the rotational angle direction can be determined.

It is to be noted that any number of the regulation portions 18d may be selectable as necessary, as far as two or more regulation portions 18d are provided for each of the coil bobbins 18.

The terminal attachment portion 18e is a member having a substantially rectangular parallelepiped shape that further protrudes outwardly in the radial direction from an upper end portion of a side face of the flange portion 18b, and two terminals (coil side terminals) 18f to be connected to the board side connector 19 are press-fit into the top face of the terminal attachment portion 18e. These two coil side terminals 18f are arranged in parallel to each other, and are secured to protrude outwardly in the radial direction from the top face of the terminal attachment portion 18e.

Further, at one side portion of the terminal attachment portion 18e, a plate-shaped guide portion 18g that protrudes outwardly in the radial direction is further formed from the top face of the terminal attachment portion 18e.

As described above, the coil side connector 16 is configured with the terminal attachment portions 18e, the coil side terminals 18f, and the guide portions 18g of the two coil bobbins 18.

The yokes 15a and 15b are members having an identical shape, and each of the yokes 15a and 15b is configured with a cylindrical member 15d which externally fits the coil bobbin 18, and a ring-shaped bottom portion 15e formed at an end portion that faces outwardly in the axial direction when the cylindrical member 15d is secured to the coil bobbin 18. The inner diameter of the bottom portion 15e is same with the inner diameter of the cylindrical member (groove portion 18c) of the coil bobbin 18.

Further, in the yokes 15a and 15b, at an end portion of the opposite side of the bottom portion 15e of the cylindrical member 15d, three depression portions 15c are formed to be spaced apart from each other at a given angle in the circumferential direction. These three depression portions 15c are formed at positions of line symmetry with a symmetry axis being set as a perpendicular line which virtually goes through the center of the coil bobbin 18 in the state where the terminal attachment portion 18e is located at an upper end portion of the coil bobbin 18.

Furthermore, a yoke cover 14 is a substantially ring-shaped member, and three projection portions 14a are formed on the outer circumferential surface to be spaced apart from each other at a given angle in the circumferential direction. This yoke cover 14 is press-fit into the inner diameters of the cylindrical members 15d of the yokes 15a and 15b with the projection portions 14a being fit in the depressed portions 15c of the yokes 15a and 15b.

In other words, the press-fit depth when the yoke cover 14 is press-fit into the yokes 15a and 15b is regulated by the projection portions 14a of the yoke cover 14 and the depression portions 15c of the yokes 15a and 15b. To be specific, the axial depth of the depression portions 15c arranged at the yokes 15a and 15b is configured to be almost half the thickness of the yoke cover 14 including the manufacturing tolerance.

In addition, R portions (corner R) 14b are respectively provided at end portions in the axial direction on the outer circumferential surfaces of the yoke cover 14. The R portion 14b should be arranged on at least a part of the outer circumferential surface.

It is to be noted that, here, the three projection portions 14a and the three depression portions 15c are respectively provided. However, the arranged number and the arranged angle of the projection portions 14a and the depression portions 15c can be set appropriately.

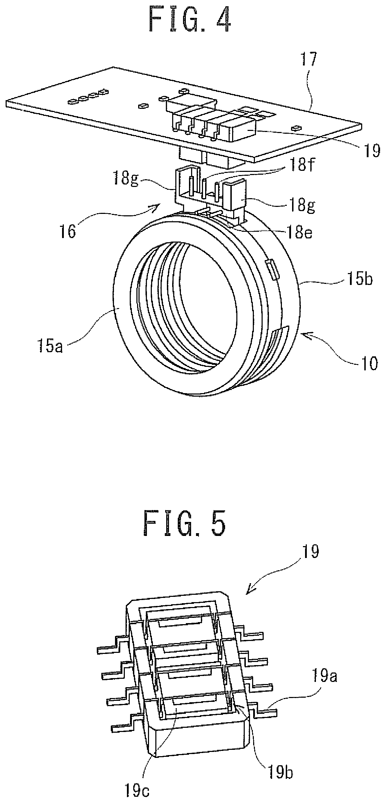

The board side connector 19 is mounted on the circuit board 17, as illustrated in FIG. 4. The board side connector 19 has a female terminal, and the coil side connector 16 is connected to the board side connector 19 in a board thickness direction, so that an electrical connection between the torque detector 10 and the circuit board 17 is made available. In addition, as another method, a coil tip portion may be bound to a coil side terminal that is press-fit into the coil bobbin 18 and secured by soldering, and then may be inserted into a board through hole and connected by soldering.

FIG. 5 is a view illustrative of a configuration of the board side connector 19.

The board side connector 19 includes terminals 19a, terminal movable portions 19b, in each of which a part of the terminal 19a is made to have a letter U shape, and two housings 19c. The board side connector 19 is a movable connector, and the terminals 19a and the housings 19c are configured to be movable individually by an elastic deformation structure of the terminal movable portion 19b.

When the torque detector 10 is assembled, firstly, the coils 13a and 13b are wound around the coil bobbins 18, respectively. When the coil 13a is wound around the coil bobbin 18, a tip portion of the coil 13a is bound and secured to one of the coil side terminals 18f by soldering or TIG welding. After the coil 13a is wound around the groove portion 18c, its termination portion is bound and secured to the other one of the coil side terminals 18f by soldering or TIG welding. This assembling method also applies to the coil 13b.

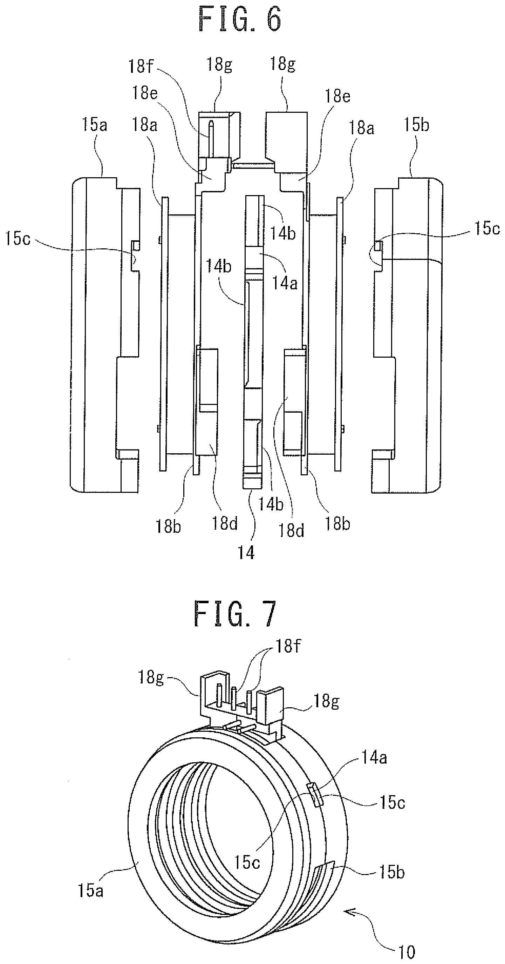

Next, the two coil bobbins 18 around which the coils 13a and 13b are wound are fit into the yokes 15a and 15b, respectively. Then, these two coil bobbins 18 are arranged to make the flange portions 18b face each other interposing the yoke cover 14, as illustrated in FIG. 6, the yokes 15a and 15b are press-fit with the yoke cover 14 from both sides in the axial direction.

Accordingly, the coils 13a and 13b of two parts are integrated, as illustrated in FIG. 7. Such integrated coils are attached to the inner side of the input shaft side housing portion 5a.

Then, the depression portions 15c of the yokes 15a and 15b and the projection portions 14a of the yoke cover 14 abut each other in the axial direction, respectively, so that the relative position of the yoke cover 14 in a press-fit direction with respect to the yokes 15a and 15b are regulated. In addition, as the axial depth of the depression portions 15c provided at the yokes 15a and 15b is almost half the thickness of the yoke cover 14, the press-fit amount can be made equal in the yoke 15a and the yoke 15b.

Furthermore, the regulation portion 18d in one of the coil bobbins 18 and the regulation portion 18d in the other one of the coil bobbins 18 engage with each other, so that the rotation in the circumferential direction of the two coil bobbins 18 is prevented by step parts of the regulation portions 18d of the two coil bobbins 18 with each other and the phase deviation is regulated.

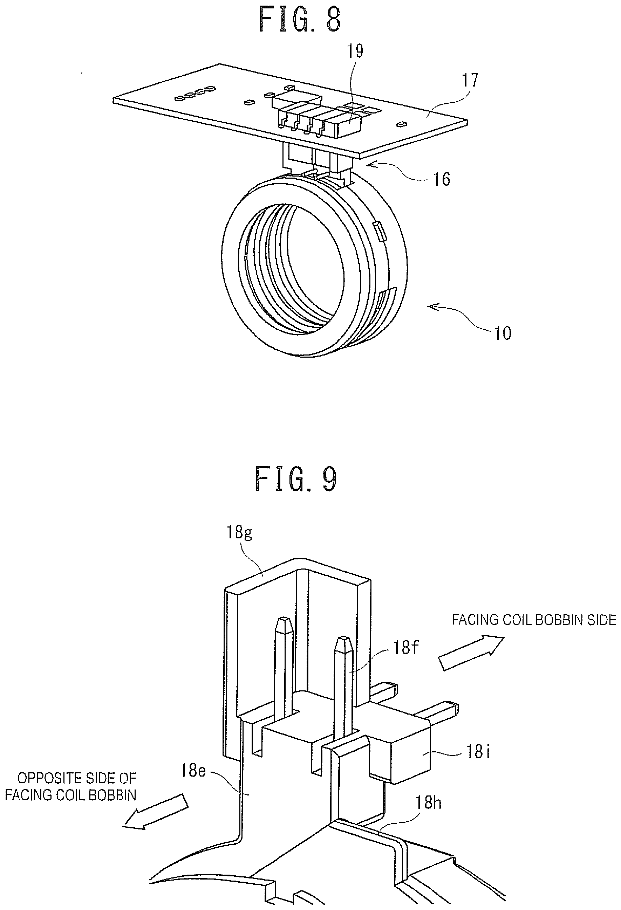

Then, the coil side connector 16 is formed by the two coil bobbins 18 facing each other to be integrated together, and such a coil side connector 16 is connected to the board side connector 19 of the circuit board 17, as illustrated in FIG. 8.

A torque operation circuit, not illustrated, configuring the torque sensor TS is mounted on the circuit board 17, the torque operation circuit is configured to detect output voltages of the two coils 13a and 13b and to detect the steering torque applied to the steering wheel and then transmitted to the input shaft 1 based on a difference between the output voltages. Thus, the torque sensor TS is configured to detect the relative displacement (rotational displacement) between the input shaft 1 and the output shaft 2 to correspond to a change in the impedance of the coil pair.

The steering torque that has been detected by the torque sensor TS is input into a controller, not illustrated. The controller receives inputs of a vehicle speed in addition to the steering torque, and conducts the steering assist control to apply the steering assist force according to these inputs to a steering system. To be specific, a steering assist torque instruction value to generate the steering assist force in an electric motor is calculated in a known procedure, the driving electric current to be supplied to the electric motor is feedback-controlled by the calculated steering assist torque instruction value and the motor current detection value . In this manner, the steering assist control is conducted.

It is to be noted that in the above description, the input shaft 1, the output shaft 2, and the torsion bar 3 correspond to a rotation shaft, the coils 13a and 13b correspond to detection coils, the yokes 15a and 15b correspond to electromagnetic yokes. In addition, the projection portion 14a and the depression portion 15c correspond to press-fit regulation portions.

Thus, in one embodiment of the present invention, the two coil bobbins 18 around which the detection coils are wound are arranged to face each other, and interposes the yoke cover 14 between the two coil bobbins 18. By press-fitting the yokes 15a and 15b with both of the coil bobbins 18 from both sides in the axial direction, two detection coils corresponding to two parts are integrated. In other words, only one yoke cover 14 is provided for two yokes 15a and 15b, and the number of times of press-fitting is once.

Thus, as compared to a case where one coil bobbin, one yoke, and one yoke cover are provided, one yoke cover is press-fit into one yoke, and then two yokes respectively press-fit with two yoke covers are integrated together, the number of parts corresponding to one yoke cover can be reduced, and its manufacturing cost corresponding to the reduction can be reduced. Further, as the number of times of press-fitting the yoke cover into the yoke can be reduced, too, and thus the assembling performance can be improved.

Further, the press-fit regulation portion (projection portion 14a and depression portion 15c) configured to regulate the press-fit depth of the yoke cover 14 into the yokes 15a and 15b is provided, so that both sides in the axial direction of the yoke cover 14 can be press-fit into the yokes, respectively.

Moreover, since the R portion is arranged at an end portion in the axial direction on the outer circumferential face of the yoke cover 14, the press-fit performance of the yoke cover 14 into the yokes 15a and 15b can be improved.

In addition, the coil bobbin 18 is provided with two or more regulation portions 18d and the two coil bobbins 18 are positioned in the rotational direction by the regulation portions 18d, so that the positioning accuracy of the coil side terminal 18f can be improved. Furthermore, since the guide portion 18g is arranged in the vicinity of the coil side terminal 18f, the insertion performance into the board side connector 19 can be improved. Thus, the connection with the board side connector 19 can be made easily.

Moreover, since the torque detector 10 is configured with two coil bobbins 18 having an identical shape, the number of the molds used for molding can be reduced. In addition, since the parts (coil bobbins 18) can be commonly used, the manufacturing cost can be reduced.

Furthermore, an inductance-type torque sensor, in a prior art technology, is accommodated in a gearbox of the electric power steering apparatus and the coil side terminal is inserted and soldered into the through hole of the sensor substrate used for signal processing, so that the coil and the sensor substrate are electrically connected. However, these years, as lead-free solder that does not include lead is used, as a background of environmental load reduction, there is a problem in that the stable quality degrades in the electrical connection by soldering as described above.

On the other hand, in one embodiment of the present invention, a connector is used for electrically connecting the coil and the sensor substrate. Thus, as compared with the electrical connection by soldering, enhancement in the quality stability can be achieved. In addition, since the coil and the sensor substrate can be connected easily, the assembling performance can be improved.

Further, since the board side connector 19 is configured with a movable connector having a contact movable portion, the two coils 13a and 13b can be connected more easily and adequately.

Two or more coils (two coils in one embodiment of the present invention) are basically used for configuring the torque sensor TS, and there is a high possibility that a relative positional displacement caused by an assembly error occurs at the coil side terminal 18f of each coil. Thus, when such a relative positional displacement of the coil side terminal 18f occurs, the coil side terminal 18f cannot be connected to the board side connector 19 and the electrical connection may not be available adequately.

On the other hand, in one embodiment of the present invention, the board side connector 19 is configured such that the terminal 19a and the housing 19c are individually movable. Thus, each of the coil side terminals 18f can be inserted easily. Thus, while absorbing the relative positional displacement of the coil side terminal 18f, the coil side terminal 18f can be fit into the board side connector 19, and the electrical connection between the coil and the sensor substrate is made available with certainty.

Thus, at the time of assembling the sensor, the board (circuit board 17) on which a connector (board side connector 19) is mounted has only to be inserted into the coil (torque detector 10). Therefore, simplification of the assembling process and improvement of the production efficiency can be expected. In addition, it is possible to configure a torque detection apparatus (torque sensor TS) that can ensure the electrical connection between the board (circuit board 17) and the coil (torque detector 10) with certainty.

Thus, in the electric power steering apparatus on which the torque detection apparatus is mounted, it is possible to detect the steering torque adequately and to conduct the steering assist control to give a steering assist force to the steering system to reduce the steering burden of the driver.

Next, a second embodiment of the present invention will be described below.

In the second embodiment, a movement regulation portion configured to regulate the movement in the axial direction of the terminal attachment portion 18e is arranged at the coil bobbin 18.

FIG. 9 is a view illustrative of the coil bobbin 18 in the second embodiment. Here, only the vicinities of the terminal attachment portion 18e are illustrated.

As illustrated in FIG. 9, adjacently to the terminal attachment portion 18e, a bobbin rib (first projection portion) 18h, which is a part of the flange portion 18b projecting outwardly in the radial direction, is formed. In addition, in the terminal attachment portion 18e, a bobbin collar (second projection portion) 18i projecting in the circumferential direction is formed.

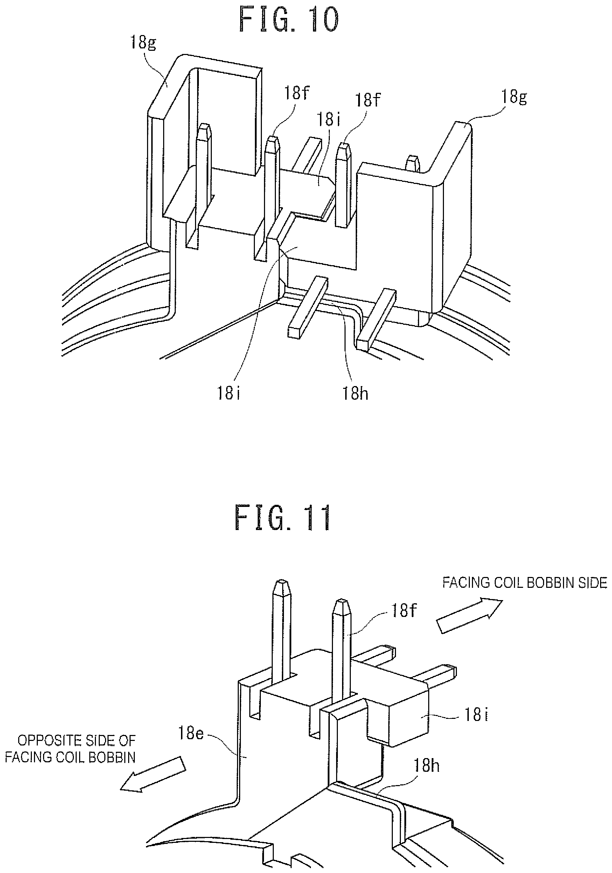

As illustrated in FIG. 10, when the torque detector 10 is assembled, the bobbin ribs 18h abut the terminal attachment portions 18e formed at the facing coil bobbins 18 from mating face sides of the coil bobbins 18, respectively. Accordingly, the bobbin ribs 18h are configured to regulate the movements of the terminal attachment portions 18e formed at the facing coil bobbins 18, in the axial direction and toward the coil bobbins 18 side in which the bobbin ribs 18h themselves are formed, respectively.

As the two coil bobbins 18 are identical parts, and have shapes to be line symmetry with respect to the yoke cover 14, the bobbin ribs 18h are configured to regulate the movements of the mating terminal attachment portions 18e, respectively. In other words, the bobbin ribs 18h are configured to naturally determine the terminal location accuracy with each other in the assembling.

In addition, as illustrated in FIG. 10, when the torque detector 10 is assembled, the bobbin collars 18i abut the other bobbin collars 18i of the terminal attachment portions 18e formed at the facing coil bobbins 18 from opposite sides to the mating faces of the coil bobbins 18, respectively. Thus, the bobbin collars 18i are configured to regulate the movements in the axial direction of the terminal attachment portions 18e formed at the facing coil bobbins 18 and toward sides separated from the coil bobbins 18 at which the bobbin collars 18i themselves are formed.

Thus, the bobbin rib 18h configured with the flange portion 18b of the coil bobbin 18 and the bobbin collar 18i formed as a part of the terminal attachment portion 18e regulate each other at the axial positions of the terminal attachment portion 18e. Thus, it is possible to ensure the location accuracy of the coil side terminal 18f at the time of assembling the torque detector 10.

Hence, in order to make an electrical connection with a printed board including a torque signal processor, even when the coil side terminal 18f is fit into a connector mounted on the printed board, for example, the coil side terminal 18f can be inserted easily and the assembling performance can be improved.

Next, a third embodiment of the present invention will be described.

In the third embodiment, a movement regulation portion configured to regulate the movement in the axial direction of the terminal attachment portion 18e is provided without including the guide portion 18g, whereas in the second embodiment, the guide portion 18g is arranged at the terminal attachment portion 18e.

FIG. 11 is a view illustrative of the coil bobbin 18 in the third embodiment. As illustrated in FIG. 11, the configuration is same as that of the coil bobbin 18 illustrated in FIG. 9, except that the guide portion 18g is not arranged at the terminal attachment portion 18e.

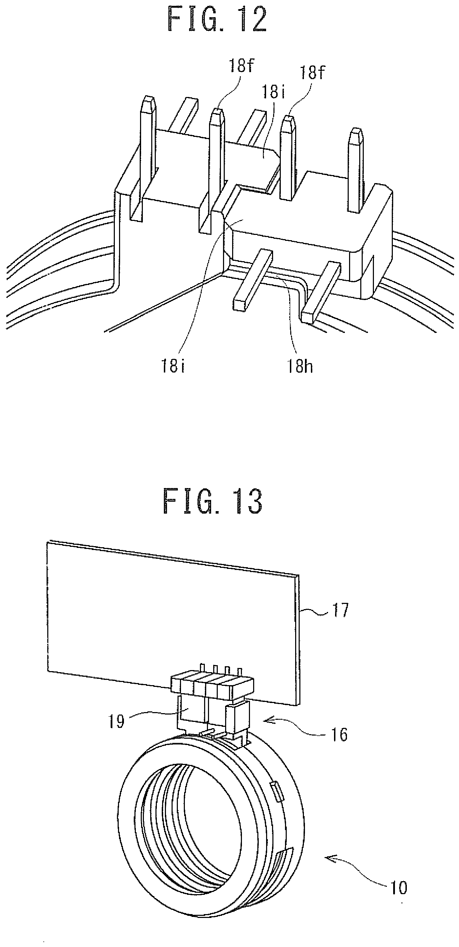

In other words, FIG. 12 illustrates the coil bobbin 18 in a state where the torque detector 10 is assembled. Also in this case, the bobbin rib 18h configured with the flange portion 18b of the coil bobbin 18 and the bobbin collar 18i configured as a part of the terminal attachment portion 18e regulate each other with respect to the axial position of the terminal attachment portion 18e. Thus, it is possible to ensure the positional accuracy of the coil side terminal 18f when the torque detector 10 is assembled.

In addition, in this case, since the guide portion 18g is not provided, when the torque detector is electrically connected to a printed board including a torque signal processor, a technique of inserting the coil side terminals 18f into through holes of the printed board and soldering can be used. In this situation, since the positional accuracy of the coil side terminal 18f is ensured, the coil side terminals 18f can be inserted into the through holes of the printed board easily, and an improvement in the assembling performance can be achieved.

Heretofore, embodiments of the present invention have been described. However, the present invention is not limited to them, and various changes and improvements are applicable.

For example, a pair of coils 13a and 13b are used as coils of the torque detector 10. However, two or more pairs of coils may be used.

Also, in the above embodiments, the case where the circuit board 17 is horizontally attached to the torque detector 10 has been described. As illustrated in FIG. 13, however, the circuit board 17 can be attached to the torque detector 10 vertically. Thus, the choice of the layout including the shape of the connector is enabled in the product limitation size.

### Industrial Availability

According to the torque detection apparatus in one embodiment of the present invention, as the yoke cover to be press-fit into two yokes holding a pair of coil bobbins, respectively, is used as a common member, the number of parts can be reduced and it is useful. In addition, as the number of times of press-fitting the yoke cover can be reduced, the assembling performance can be improved and it is useful.

Then, in an electric power steering apparatus, and a vehicle, each including the above torque detection apparatus, the steering assist control with high reliability can be achieved and it is useful.

### Reference Signs List

1 ... input shaft, 2 ... output shaft, 3 ... torsion bar, 5 ... housing, 5a ... input shaft side housing portion, 5b ... output shaft side housing portion, 7 ... worm wheel, 8 ... worm, TS ... torque sensor, 10 ... torque detector, 11 ... sensor shaft, 12 ... cylindrical member, 13a, 13b ... detection coil, 14 ... yoke cover, 15a, 15b ... yoke, 16 ... coil side connector, 17 ... circuit board, 18 ... coil bobbin, 18a, 18b ... flange portion, 18c ... groove portion, 18d ... regulation portion, 18e ... terminal attachment portion, 18f ... coil side terminal, 18g ... guide portion, 18h ... bobbin rib, 18i ... bobbin collar, 19 ... board side connector, 19a ... terminal, 19b ... terminal movable portion, 19c ... housing

## Claims

1. A torque detection apparatus, comprising:
a pair of detection coils (13a, 13b) configured to change impedances in opposite directions to each other depending on torque generated at a rotation shaft;
a circuit board (17) configured to detect output voltages from the pair of detection coils (13a, 13b), and to have a torque detection function of detecting the torque based on the output voltages;
two electromagnetic yokes (15a, 15b) having cylindrical portions in which two coil bobbins (18) are fit and held, respectively; and
a yoke cover (14) configured to be press-fit into inner diameters of the cylindrical portions of the two electromagnetic yokes (15a, 15b) at a position interposed by the two electromagnetic yokes (15a, 15b) facing each other in an axial direction;
two coil bobbins (18) having a reel shape, around which one of the coils of the pair of detection coils (13a, 13b) is wound, respectively;
a board side connector (19) mounted on the circuit board (17);
coil side terminals (18f) formed at the coil bobbins (18) and connected with a tip portion and a termination portion respectively of each of the pair of detection coils (13a, 13b); and
a coil side connector (16) formed at each of the two coil bobbins capable of establishing an electrical connection by being directly connected with the board side connector (19);
**characterized in that**
the coil side connector (16) has a terminal attachment portion (18e) formed at an end portion of a side face of each of the two coil bobbins (18) and having terminals (18f) to which a tip portion and a termination portion of one of the pair of detection coils (13a, 13b) are attached, respectively; and
the torque detection apparatus having a movement regulation portion (18d) configured to regulate a movement in the axial direction of the terminal attachment portion (18e) with respect to the two coil bobbins (18) facing each other.

2. The torque detection apparatus according to claim 1, wherein the board side connector (19) and the coil side connector (16) are directly connected by mating a female part of the board side connector (19) with a male part of the coil side connector (16).

3. The torque detection apparatus according to claim 1 or claim 2, wherein the board side connector (19) is a connector having a same number of movable pieces to a number of the detection coils (13a, 13b).

4. The torque detection apparatus according to claim 3, wherein the board side connector (19) has two movable pieces corresponding to the pair of detection coils (13a, 13b).

5. The torque detection apparatus according to any one of claim 1 to claim 4, wherein the coil side connector (16) includes:
the terminal (19a) configured to stand up at the terminal attachment portion (18e), in an insertion direction of the coil side connector (16) into the board side connector (19) ; and
a plate-shaped guide portion (18g) formed at at least one side face of the terminal attachment portion (18e) and protruding in the insertion direction.

6. The torque detection apparatus according to any one of claim 1 to claim 5, wherein the coil bobbins (18) around which the pair of detection coils (13a, 13b) are respectively wound are assembled to face each other,
further comprising a regulation portion configured to regulate a phase difference in a circumferential direction between the coil bobbins (18).

7. The torque detection apparatus according to claim 6, wherein the regulation portion is a step portion in which a depression and a protrusion are arranged in the circumferential direction on the mating face side of each of the coil bobbins (18).

8. An electric power steering apparatus configured to apply to a steering system a steering assist force to reduce a steering burden of a driver, the electric power steering apparatus comprising:
the torque detection apparatus according to any one of claim 1 to claim 7 configured to detect steering torque input into a steering mechanism; and
a motor controller configured to drive and control an electric motor to apply the steering assist force based on at least the steering torque detected by the torque detection apparatus.

9. A vehicle comprising the electric power steering apparatus according to claim 8.

10. The torque detection apparatus according to claim 1, further comprising:
a yoke cover (14) configured to be press-fit into inner diameters of the cylindrical portions of the two electromagnetic yokes (15a, 15b) at a position interposed by the two electromagnetic yokes (15a, 15b) facing each other in an axial direction; and
a press-fit regulation portion configured to regulate a press-fit depth of the yoke cover (14) with respect to the two electromagnetic yokes (15a, 15b).

11. The torque detection apparatus according to claim 10,
wherein the press-fit regulation portion is formed at an end portion in the axial direction of each of the cylindrical portions of the two electromagnetic yokes (15a, 15b), and is configured with a depression portion being depressed in the axial direction and a projection portion projecting outwardly in a radial direction with respect to an inner diameter of each of the two electromagnetic yokes (15a, 15b), and
wherein the press-fit depth of the yoke cover (14) with respect to each of the two electromagnetic yokes (15a, 15b) is regulated by abutting an end face on an outer side in the axial direction of the projection portion against a bottom portion of the depression portion.

12. The torque detection apparatus according to any one of claim 1 to claim 11, wherein the yoke cover (14) comprises an R portion at an end portion in the axial direction on an outer circumferential face.

13. The torque detection apparatus according to claim 1,
wherein the movement regulation portion (18d) is configured with a first projection portion formed by a part of a flange portion of a first one of the two coil bobbins (18) projecting outwardly in the radial direction, and
wherein a movement of the terminal attachment portion (18e) formed at a second one of the two coil bobbins (18) in the axial direction and toward the first one side of the two coil bobbins (18) is regulated by abutting the first projection portion formed at the first one of the two coil bobbins (18) against at least a part of the movement regulation portion (18d) formed at the second one of the two coil bobbins (18) from mating face sides of the two coil bobbins (18).

14. The torque detection apparatus according to claim 1 or claim 13,
wherein the movement regulation portion (18d) is configured with a second projection portion formed by a part of the terminal attachment portion (18e) projecting outwardly in the circumferential direction, and
wherein a movement of the terminal attachment portion (18e) formed at the second one of the two coil bobbins (18) in the axial direction and toward an opposite side to the first one of the two coil bobbins (18) is regulated by abutting the second projection portion formed at the terminal attachment portion (18e) formed at the first one of the two coil bobbins (18) against at least a part of the terminal attachment portion (18e) from an opposite side to the mating faces of the two coil bobbins (18).

## Patentansprüche

1. Drehmomenterfassungsvorrichtung, umfassend:
ein Paar von Erfassungsspulen (13a, 13b), konfiguriert um Impedanzen in zueinander entgegengesetzten Richtungen in Abhängigkeit von an einer Drehwelle erzeugtem Drehmoment zu verändern;
eine Leiterplatte (17), die konfiguriert ist, um Ausgangsspannungen von dem Paar von Erfassungsspulen (13a, 13b) zu erfassen und eine Drehmomenterfassungsfunktion zum Erfassen des Drehmoments basierend auf den Ausgangsspannungen aufzuweisen;
zwei elektromagnetische Joche (15a, 15b) mit zylindrischen Abschnitten, in welchen zwei Spulenkörper (18) jeweils eingepasst und gehalten sind; und
eine Jochabdeckung (14), die konfiguriert ist, um in Innendurchmesser der zylindrischen Abschnitte der zwei elektromagnetischen Joche (15a, 15b) an einer Position pressgepasst zu werden, die zwischen den zwei elektromagnetischen Jochen (15a, 15b) liegt, die einander in einer axialen Richtung zugewandt sind ;
zwei Spulenkörper (18) mit einer Rollenform, um die jeweils eine der Spulen des Paares von Erfassungsspulen (13a, 13b) gewickelt ist;
einen plattenseitigen Verbinder (19), der auf der Leiterplatte (17) montiert ist;
spulenseitige Anschlüsse (18f), die an den Spulenkörpern (18) ausgebildet und mit einem Vorderabschnitt beziehungsweise einem Abschlussabschnitt von jeder des Paars von Erfassungsspulen (13a, 13b) verbunden sind; und
einen spulenseitigen Verbinder (16), der an jedem der zwei Spulenkörper ausgebildet ist, und eine elektrische Verbindung herstellen kann, indem er direkt mit dem plattenseitigen Verbinder (19) verbunden wird;
**dadurch gekennzeichnet, dass**
der spulenseitigen Verbinder (16) aufweist
einen Anschlussbefestigungsabschnitt (18e), der an einem Endabschnitt einer Seitenfläche jedes der zwei Spulenkörper (18) ausgebildet ist und Anschlüsse (18f) aufweist, an denen ein Vorderabschnitt beziehungsweise ein Abschlussabschnitt einer des Paars von Erfassungsspulen (13a, 13b) angebracht sind; und
einen Bewegungsregulierungsabschnitt (18d), der konfiguriert ist, um eine Bewegung in der axialen Richtung des Anschlussbefestigungsabschnitts (18e) in Bezug auf die zwei Spulenkörper (18), die einander zugewandt sind, zu regulieren.

2. Drehmomenterfassungsvorrichtung nach Anspruch 1, wobei der plattenseitige Verbinder (19) und der spulenseitige Verbinder (16) direkt verbunden sind, indem ein weiblicher Teil des plattenseitigen Verbinders (19) mit einem männlichen Teil des spulenseitigen Verbinders (16) in Eingriff gebracht wird.

3. Drehmomenterfassungsvorrichtung nach Anspruch 1 oder Anspruch 2, wobei der plattenseitige Verbinder (19) ein Verbinder mit der gleichen Anzahl von beweglichen Teilen zu einer Anzahl von Erfassungsspulen (13a, 13b) ist.

4. Drehmomenterfassungsvorrichtung nach Anspruch 3, wobei der plattenseitige Verbinder (19) zwei bewegliche Teile aufweist, die dem Paar von Erfassungsspulen (13a, 13b) entsprechen.

5. Drehmomenterfassungsvorrichtung nach einem der Ansprüche 1 bis 4, wobei der spulenseitige Verbinder (16) enthält:
den Anschluss (19a), der so konfiguriert ist, dass er sich an dem Anschlussbefestigungsabschnitt (18e) in einer Einsteckrichtung des spulenseitigen Verbinders (16) in den plattenseitigen Verbinder (19) erhebt; und
einen plattenförmigen Führungsabschnitt (18g), der an mindestens einer Seitenfläche des Anschlussbefestigungsabschnitts (18e) ausgebildet ist und in Einführrichtung vorsteht.

6. Drehmomenterfassungsvorrichtung nach einem der Ansprüche 1 bis 5, wobei die Spulenkörper (18), um die das Paar von Erfassungsspulen (13a, 13b) jeweils gewickelt ist, so zusammengebaut sind, dass sie einander zugewandt sind,
ferner umfassend einen Regulierungsabschnitt, der konfiguriert ist, um eine Phasendifferenz in einer Umfangsrichtung zwischen den Spulenkörpern (18) zu regulieren.

7. Drehmomenterfassungsvorrichtung nach Anspruch 6, wobei der Regulierungsabschnitt ein Stufenabschnitt ist, in dem eine Vertiefung und ein Vorsprung in Umfangsrichtung auf der Gegenflächenseite jedes der Spulenkörper (18) angeordnet sind.

8. Elektrische Servolenkvorrichtung, die konfiguriert ist, um auf ein Lenksystem eine Lenkhilfskraft aufzubringen, um eine Lenkbelastung eines Fahrers zu reduzieren, wobei die elektrische Servolenkvorrichtung umfasst:
die Drehmomenterfassungsvorrichtung nach einem der Ansprüche 1 bis 7, die konfiguriert ist, um ein in einen Lenkmechanismus eingegebenes Lenkdrehmoment zu erfassen; und
eine Motorsteuerung, die konfiguriert ist, um einen Elektromotor anzutreiben und zu steuern, um die Lenkhilfskraft basierend auf mindestens dem von der Drehmomenterfassungsvorrichtung erfassten Lenkdrehmoment aufzubringen.

9. Fahrzeug mit der elektrischen Servolenkvorrichtung nach Anspruch 8.

10. Drehmomenterfassungsvorrichtung nach Anspruch 1, ferner umfassend:
eine Jochabdeckung (14), die konfiguriert ist, um in Innendurchmesser der zylindrischen Abschnitte der zwei elektromagnetischen Joche (15a, 15b) an einer Position pressgepasst zu werden, die zwischen den zwei elektromagnetischen Jochen (15a, 15b) liegt, die einander in einer axialen Richtung zugewandt sind; und
einen Einpressregulierungsabschnitt, der konfiguriert ist, um eine Einpresstiefe der Jochabdeckung (14) in Bezug auf die zwei elektromagnetischen Joche (15a, 15b) zu regulieren.

11. Drehmomenterfassungsvorrichtung nach Anspruch 10,
wobei der Presspassungsregulierungsabschnitt an einem Endabschnitt in der Axialrichtung jedes der zylindrischen Abschnitte der zwei elektromagnetischen Joche (15a, 15b) ausgebildet ist und mit einem in der Axialrichtung vertieften Vertiefungsabschnitt und einem Vorsprungsabschnitt konfiguriert ist, der bezüglich eines Innendurchmessers von jedem der beiden elektromagnetischen Joche (15a, 15b) und in radialer Richtung nach außen vorsteht,
wobei die Einpresstiefe der Jochabdeckung (14) in Bezug auf jedes der zwei elektromagnetischen Joche (15a, 15b) reguliert wird, indem eine Endfläche an einer Außenseite in der axialen Richtung des Vorsprungsabschnitts gegen einen Bodenabschnitt des Vertiefungsabschnitts stößt.

12. Drehmomenterfassungsvorrichtung nach einem der Ansprüche 1 bis 11, wobei die Jochabdeckung (14) einen R-Abschnitt an einem Endabschnitt in axialer Richtung an einer Außenumfangsfläche aufweist.

13. Drehmomenterfassungsvorrichtung nach Anspruch 1,
wobei der Bewegungsregulierungsabschnitt (18d) mit einem ersten Vorsprungsabschnitt konfiguriert ist, der durch einen Teil eines Flanschabschnitts eines ersten der beiden Spulenkörper (18) gebildet ist, der in radialer Richtung nach außen vorsteht, und
wobei eine Bewegung des Anschlussbefestigungsabschnitts (18e), der an einem zweiten der beiden Spulenkörper (18) ausgebildet ist, in axialer Richtung und in Richtung der ersten einen Seite der beiden Spulenkörper (18) durch Anstoßen an den ersten Vorsprungsabschnitt, der an dem ersten der zwei Spulenkörper (18) ausgebildet ist, gegen zumindest einen Teil des Bewegungsregulierungsabschnitts (18d) reguliert wird, der an dem zweiten der zwei Spulenkörper (18) von zusammenpassenden Stirnseiten der zwei Spulenkörper (18) ausgebildet ist.

14. Drehmomenterfassungsvorrichtung nach Anspruch 1 oder Anspruch 13,
wobei der Bewegungsregulierungsabschnitt (18d) mit einem zweiten Vorsprungsabschnitt konfiguriert ist, der durch einen Teil des Anschlussbefestigungsabschnitts (18e) gebildet ist, der in Umfangsrichtung nach außen vorsteht, und
wobei eine Bewegung des Anschlussbefestigungsabschnitts (18e), der an dem zweiten der zwei Spulenkörper (18) ausgebildet ist, in der axialen Richtung und zu einer zu dem ersten der zwei Spulenkörper (18) entgegengesetzten Seite durch Anstoßen an den zweiten Vorsprungsabschnitt, der an dem Anschlussbefestigungsabschnitt (18e) ausgebildet ist, der an dem ersten der beiden Spulenkörper (18) ausgebildet ist, gegen zumindest einen Teil des Anschlussbefestigungsabschnitts (18e) von einer der Passflächen der beiden Spulenkörper (18) gegenüberliegenden Seite reguliert wird.

## Revendications

1. Appareil de détection de couple, comprenant :
une paire de bobines de détection (13a, 13b) configurées pour modifier des impédances dans des directions opposées l'une de l'autre en fonction d'un couple généré au niveau d'un arbre de rotation ;
une carte de circuit imprimé (17) configurée pour détecter des tensions de sortie depuis la paire de bobines de détection (13a, 13b), et pour avoir une fonction de détection de couple permettant de détecter le couple sur la base des tensions de sortie ;
deux culasses électromagnétiques (15a, 15b) ayant des parties cylindriques dans lesquelles deux corps de bobine (18) sont fixés et maintenus, respectivement ; et
un couvercle de culasse (14) configuré pour être ajusté par pression dans des diamètres internes des parties cylindriques des deux culasses électromagnétiques (15a, 15b) au niveau d'une position intercalée entre les deux culasses électromagnétiques (15a, 15b) se faisant mutuellement face dans une direction axiale ;
deux corps de bobine (18) ayant une forme de rouleau, autour desquels l'une des bobines de la paire de bobines de détection (13a, 13b) est enroulée, respectivement ;
un connecteur côté carte (19) monté sur la carte de circuit imprimé (17) ;
des terminaux côté bobine (18f) formés au niveau des corps de bobine (18) et connectés respectivement à une partie de pointe et une partie de terminaison de chacune de la paire de bobines de détection (13a, 13b) ; et
un connecteur côté bobine (16) formé au niveau de chacun des deux corps de bobine capable d'établir une connexion électrique en étant directement connecté au connecteur côté carte (19) ;
**caractérisé en ce que**
le connecteur côté bobine (16) a une partie de raccordement de terminal (18e) formée au niveau d'une partie d'extrémité d'une face latérale de chacun des deux corps de bobine (18) et ayant des terminaux (18f) auxquels une partie de pointe et une partie de terminaison de l'une de la paire de bobines de détection (13a, 13b) sont raccordées, respectivement ; et
l'appareil de détection de couple ayant une partie de réglage de mouvement (18d) configurée pour régler un mouvement dans la direction axiale de la partie de raccordement de terminal (18e) par rapport aux deux corps de bobine (18) se faisant mutuellement face.

2. Appareil de détection de couple selon la revendication 1, dans lequel le connecteur côté carte (19) et le connecteur côté bobine (16) sont directement connectés en accouplant un élément femelle du connecteur côté carte (19) à un élément mâle du connecteur côté bobine (16).

3. Appareil de détection de couple selon la revendication 1 ou 2, dans lequel le connecteur côté carte (19) est un connecteur ayant un nombre de pièces mobiles identique à un nombre des bobines de détection (13a, 13b).

4. Appareil de détection de couple selon la revendication 3, dans lequel le connecteur côté carte (19) a deux pièces mobiles correspondant à la paire de bobines de détection (13a, 13b).

5. Appareil de détection de couple selon l'une quelconque des revendications 1 à 4, dans lequel le connecteur côté bobine (16) inclut :
le terminal (19a) configuré pour être debout au niveau de la partie de raccordement de terminal (18e), dans une direction d'insertion du connecteur côté bobine (16) dans le connecteur côté carte (19) ; et
une partie de guidage en forme de plaque (18g) formée au niveau d'au moins une face latérale de la partie de raccordement de terminal (18e) et faisant saillie dans la direction d'insertion.

6. Appareil de détection de couple selon l'une quelconque des revendications 1 à 5, dans lequel les corps de bobine (18) autour desquels la paire de bobines de détection (13a, 13b) sont respectivement enroulées sont assemblés pour se faire mutuellement face,
comprenant en outre une partie de réglage configurée pour régler une différence de phase dans une direction circonférentielle entre les corps de bobine (18).

7. Appareil de détection de couple selon la revendication 6, dans lequel la partie de réglage est une partie étagée dans laquelle un creux et une saillie sont agencés dans la direction circonférentielle sur le côté de face d'accouplement de chacun des corps de bobine (18).

8. Appareil de direction assistée électrique configuré pour appliquer à un système de direction une force d'assistance de direction afin de réduire une charge de direction d'un conducteur, l'appareil de direction assistée électrique comprenant :
l'appareil de détection de couple selon l'une quelconque des revendications 1 à 7 configuré pour détecter une entrée de couple de direction dans un mécanisme de direction ; et
un dispositif de commande de moteur configuré pour entraîner et commander un moteur électrique afin d'appliquer la force d'assistance de direction sur la base au moins du couple de direction détecté par l'appareil de détection de couple.

9. Véhicule comprenant l'appareil de direction assistée électrique selon la revendication 8.

10. Appareil de détection de couple selon la revendication 1, comprenant en outre :
un couvercle de culasse (14) configuré pour être ajusté par pression dans des diamètres internes des parties cylindriques des deux culasses électromagnétiques (15a, 15b) au niveau d'une position intercalée entre les deux culasses électromagnétiques (15a, 15b) se faisant mutuellement face dans une direction axiale ; et
une partie de réglage d'ajustement par pression configurée pour régler une profondeur d'ajustement par pression du couvercle de culasse (14) par rapport aux deux culasses électromagnétiques (15a, 15b).

11. Appareil de détection de couple selon la revendication 10,
dans lequel la partie de réglage d'ajustement par pression est formée au niveau d'une partie d'extrémité dans la direction axiale de chacune des parties cylindriques des deux culasses électromagnétiques (15a, 15b), et est configurée avec une partie de creux creusée dans la direction axiale et une partie de projection en projection vers l'extérieur dans une direction radiale par rapport à un diamètre interne de chacune des deux culasses électromagnétiques (15a, 15b), et
dans lequel la profondeur d'ajustement par pression du couvercle de culasse (14) par rapport à chacune des deux culasses électromagnétiques (15a, 15b) est réglée par la mise en butée d'une face d'extrémité sur un côté externe dans la direction axiale de la partie de projection contre une partie de fond de la partie de creux.

12. Appareil de détection de couple selon l'une quelconque des revendications 1 à 11, dans lequel le couvercle de culasse (14) comprend une partie R au niveau d'une partie d'extrémité dans la direction axiale sur une face circonférentielle externe.

13. Appareil de détection de couple selon la revendication 1,
dans lequel la partie de réglage de mouvement (18d) est configurée avec une première partie de projection formée par un élément d'une partie de bride d'un premier des deux corps de bobine (18) en projection vers l'extérieur dans la direction radiale, et
dans lequel un mouvement de la partie de raccordement de terminal (18e) formée au niveau d'un second des deux corps de bobine (18) dans la direction axiale et vers le premier côté des deux corps de bobine (18) est réglé par la mise en butée de la première partie de projection formée au niveau du premier des deux corps de bobine (18) contre au moins un élément de la partie de réglage de mouvement (18d) formée au niveau du second des deux corps de bobine (18) depuis les côtés de face d'accouplement des deux corps de bobine (18).

14. Appareil de détection de couple selon la revendication 1 ou 13,
dans lequel la partie de réglage de mouvement (18d) est configurée avec une seconde partie de projection formée par un élément de la partie de raccordement de terminal (18e) en projection vers l'extérieur dans la direction circonférentielle, et
dans lequel un mouvement de la partie de raccordement de terminal (18e) formée au niveau du second des deux corps de bobine (18) dans la direction axiale et vers un côté opposé au premier des deux corps de bobine (18) est réglé par la mise en butée de la seconde partie de projection formée au niveau de la partie de raccordement de terminal (18e) formée au niveau du premier des deux corps de bobine (18) contre au moins un élément de la partie de raccordement de terminal (18e) depuis un côté opposé aux faces d'accouplement des deux corps de bobine (18).
